# EUROPEAN PATENT SPECIFICATION

(11) **EP 1 293 712 B1**
(45) Date of publication and mention of the grant of the patent: **09.02.2005**
(21) Application number: 02020384.0
(22) Date of filing: 12.09.2002
(51) Int. Cl.: F16K 11/074

(54) **Switching assembly having an inlet way and five oulet ways for faucet components**
Schaltungsanordnung mit einem Eingang und fünf Ausgängen für Wasserhahnkomponenten
Dispositif de commutation avec une entrée et cinq sorties pour des composants pour robinets

(30) Priority: 14.09.2001 IT MI20011936
(43) Date of publication of application: 19.03.2003
(73) Proprietor: Soldi, Barbara, 28010 Pella Fraz. Alzo (Novara) (IT)
(72) Inventor: Soldi, Barbara, 28010 Pella Fraz. Alzo (Novara) (IT)
(74) Representative: Cicogna, Franco

(56) References cited:
- WO-A-82/00696
- US-A- 5 992 459
- US-B1- 6 357 476

## Description

### BACKGROUND OF THE INVENTION

The present invention relates to a switching assembly having an inlet way or path and five outlet ways for faucet components, in particular for water supplying different fittings of a multi-function shower box.

Shower boxes or cabins provided with several fittings allowing to deliver water through a manual shower element, a shower top blower assembly, a plurality of side jets, a foot washing outlet and an outlet for water supplying a basin included in the shower box are already known.

The document WO 82 00696 substantially discloses the preamble of claim 1.

### SUMMARY OF THE INVENTION

The aim of the present invention is to provide a switching assembly, having an inlet way and five outlet ways, specifically designed for selectively water supplying the fittings of a multi-function shower box, in which the device allowing to selectively switch the water flow toward one of the fittings are separated and independent from the valve body integrated in the switching assembly.

Within the scope of the above mentioned aim, a main object of the present invention is to provide such a switching assembly having a very high mechanical strength, together with very good sliding characteristics for sliding elements forming the switching devices thereof.

Another object of the present invention is to provide such a switching assembly having an inlet way and five outlet ways, including a movable ceramics disc which is perfectly balanced and adapted to facilitate the mutual rotary movement with respect to the fixed ceramics disc, even under a high pressure condition.

Another object of the present invention is to provide such a switching assembly providing perfect sealing characteristics at the outlet of the fixed ceramics disc, even after a very long use time period.

Yet another object of the present invention is to provide such a switching assembly which can be easily made by conventional processing methods and which, moreover, is very competitive from a mere economic standpoint.

According to one aspect of the present invention, the above mentioned aim and objects, as well as yet other objects, which will become more apparent hereinafter, are achieved by a switching assembly, according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

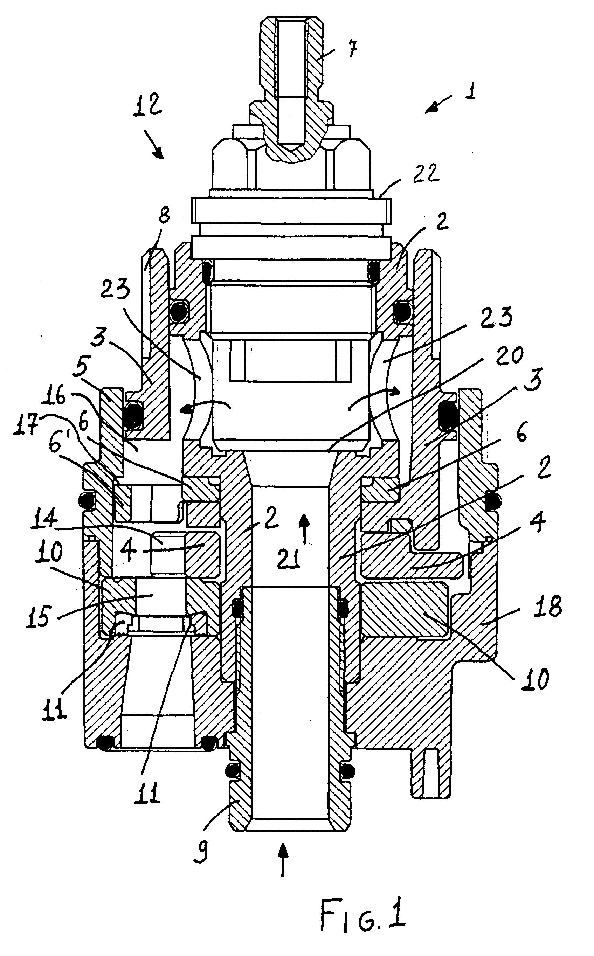

Figure 1 is a cross-sectional elevation view of the switching assembly according to the present invention; and

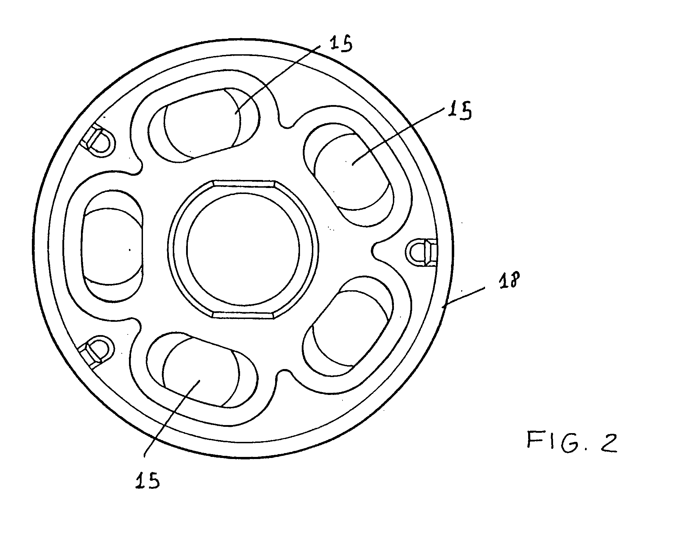

Figure 2 is a bottom plan view of the housing of the cartridge applied to the switching assembly according to the present invention.

### DESCRIPTION OF THE PREFERRED EMBODIMENT

With reference to the number references of the above mentioned figures, the switching assembly according to the present invention, which has been generally indicated by the reference number 1, comprises a central body 2, made of brass or any other suitable materials, operating as a support element thereabout rotates an entrainment or driving element 3 of a ceramics disc 4, for selecting a plurality of water supplying circuits coupled to respective fittings.

The ceramics disc 4 comprises at least a communicating port 14 for respectively communicating one holes of the holes 15 of a bottom fixed disc 10 with the delivery chamber 16 defined between the central body 2 and a top outer casing 5.

Above the ceramics disc 4 is mounted a ring element 6 including a peripheral resilient tooth element 6', which is rotatively driven by the entrainment or driving element 3.

As the resilient tooth element 6' is rotatively driven, it engages with radially extending cavities 17, suitably formed on the inner surface of the top outer casing 5.

The top outer casing 5, in turn, is made rigid with a bottom outer casing 18, for example by an ultrasound welding method, thereby providing a monolithic outer casing for receiving therein a cartridge assembly.

More specifically, the bottom outer casing 18 is provided for holding therein the fixed disc 10 and bottom portion of the central body 2, which bottom portion is locked with respect to the bottom outer casing 18 by a threaded locking element 9 which extends outside of the outer casing.

Thus, the threaded locking element 9, screw engaged at the bottom portion of the central body 2, provides a removable coupling of the elements constituting an integrating portion of the cartridge assembly.

As shown, the threaded locking element 9 is axially perforated in order to allow inlet water to pass therethrough toward the delivery region 20 inside the central body 2.

The water flow can be shut-off at the delivery region 20 by a shut-off or closing device, or valve body, such as a screw element 22 including a driving rod 7 to which a driving knob, not shown, can be coupled.

The valve body, in turn, can be integrated into the switching assembly, as in the shown embodiment, or the water supply to the switching assembly can be achieved by a separated valve body, according to the assembling requirements.

If the water flow is not locked by the screw element 22, then water coming from the central passage 21 of the central body 2 will enter the delivery region 20 and through the radially extending holes 23, said water will enter the delivery chamber 16 defined between the central body 2 and top outer casing 5.

From the water delivery chamber 16, water can pass through one of the selected peripheral outlet holes 15, by rotating the ceramics disc 4 through the entrainment or driving element 3.

To that end, the driving element 3 comprises a thread and slot 8, for allowing a water jet selecting knob to be coupled thereto, said jets being not specifically shown.

The top portion of the outer casing 5 operates as a holding element for the fixed disc 10, through which are formed the peripheral outlet holes or ports 15.

The disclosed construction prevents the fixed disc 10 from being undesirably raised under the urging force provided by the seals 11 which, in prior switching cartridges generate a great friction between the fixed disc and movable disc, thereby hindering a proper rotary movement for selecting the water flows.

It has been found that the invention fully achieves the intended aim and objects.

In fact, the invention provides a switching assembly, having an inlet way and five outlet ways, which can selectively water supply several fittings of a multifunction shower box, and in which the switching devices for selectively switching the water flow toward one of the fittings, are separated and independent from the valve body integrated in the switching assembly.

An important advantage of the invention, in fact, consists of the possibility of integrating the valve body in the switching assembly, as in the shown embodiment, or to control the water supply by means of a separated valve body, according to the assembling requirements.

The separation of the water switching and shut-off functions is moreover advantageous for maintenance or servicing operations, since it would be possible to replace the valve body without affecting the switching devices.

Moreover, it is possible to use standard valve bodies.

Yet another advantage of the present invention is that the switching assembly can be easily and smoothly operated, since the movable sliding parts have been designed for sliding with a very reduced friction.

Furthermore, the used materials, as well as the contingent size and shapes, can be any, depending on requirements.

## Claims

1. A switching assembly (1), having at least an inlet way and a plurality of outlet ways for faucet components, in particular for water supplying fittings of a multifunction shower box, comprising a central body (2) operating as a support element, an entraining element (3) of a movable disc (4) rotatable around the central body for selecting water supplying circuits coupled to said fittings, said movable disc (4) comprising at least a port (14) for respectively communicating one of the holes (15) of a fixed ceramics disc (10) of the switching assembly with a delivery chamber (16) defined between the central body (2) and an outer casing (5, 18) of the switching assembly **characterized in that** said outer casing (5, 18) comprises a top outer casing (5) and a bottom outer casing (18), the top outer casing (5) being rigid by fixed with the bottom outer casing (18) by an ultrasound weldment, thereby providing a single-piece outer casing (5, 18), **characterised in that** said outer casing (5, 18) further includes therein a valve body (22) for shutting off the water flow supplied to the inlet way.

2. A switching assembly, according to claim 1, **characterized in that** said bottom outer casing (18) is designed for holding therein the fixed ceramics disc (10) and a bottom portion of the central body (2), which bottom portion (2) can be locked with respect to the bottom outer casing (18) by a locking threaded element (9) extending outside of the outer casing.

3. A switching assembly, according to claim 2, **characterized in that** said locking threaded element (9) is axially perforated for allowing inlet water to pass therethrough toward a delivery region (20) inside the central body (2).

4. A switching assembly, according to one or more of the preceding claims, **characterized in that** a ring element (6) is mounted on the top (i.e the surface of the movable disc opposite to the fixed ceramics disk (10)) of the movable disc (4).

5. A switching assembly, according to claim 4, **characterized in that** said ring element (6) comprises a peripheral elastic tooth element (6') and is driven by a driving element (3) and that said elastic tooth element (6') engages, as it is rotated, with radially extending cavities (17) formed on an inner surface of said top outer casing (5).

6. A switching assembly, according to one or more of the preceding claims, **characterized in that** the water supply flow can be shut-off, at the delivery region (20), by the valve body comprising a screw element (22) including a control rod (7) to which a control knob is connected.

## Patentansprüche

1. Schaltungsanordnung (1) mit mindestens einem Eingang und mehreren Ausgängen für Wasserhahnkomponenten, insbesondere für Wasserleitungsarmaturen einer Multifunktions-Duschbox, die einen Zentralkörper (2) umfasst, der als Stützelement fungiert, ein Förderelement (3) einer beweglichen Scheibe (4), die sich um den Zentralkörper drehen kann, um Wasserleitungskreisläufe auszuwählen, die mit den Armaturen verbunden sind, wobei die bewegliche Scheibe (4) mindestens eine Anschlussstelle umfasst, um jeweils eine der Öffnungen (15) einer festen keramischen Scheibe (10) der Schaltungsanordnung mit einer Anlieferungskammer (16) zu verbinden, die zwischen dem Zentralkörper (2) und einem Außengehäuse (5, 18) der Schaltungsanordnung angeordnet ist, **dadurch gekennzeichnet, dass** das Außengehäuse (5, 18) ein oberes Außengehäuse (5) und ein unteres Außengehäuse (18) umfasst, wobei das obere Außengehäuse (5) mit dem unteren Außengehäuse (18) durch eine Ultraschall-Schweißverbindung fest verbunden ist, wodurch ein einteiliges Außengehäuse (5, 18) bereitgestellt wird, **dadurch gekennzeichnet, dass** das Außengehäuse (5, 18) darin einen Ventilkörper (22) umfasst, um den Wasserfluss abzustellen, der zum Eingang geleitet wird.

2. Schaltungsanordnung nach Anspruch 1, **dadurch gekennzeichnet, dass** das untere Außengehäuse (18) ausgelegt ist, um darin die feste keramische Scheibe (10) und einen unteren Abschnitt des Zentralkörpers (2) zu halten, wobei der untere Abschnitt (2) bezüglich des unteren Außengehäuses (18) durch ein Sperrgewindeelement (9) gesperrt werden kann, das sich über die Außenseite des Außengehäuses erstreckt.

3. Schaltungsanordnung nach Anspruch 2, **dadurch gekennzeichnet, dass** das Sperrgewindeelement (9) längs perforiert ist, damit das hereinkommende Wasser dadurch in einen Anlieferungsbereich (20) innerhalb des Zentralkörpers (2) fließen kann.

4. Schaltungsanordnung nach einem oder mehreren der vorherigen Ansprüche, **dadurch gekennzeichnet, dass** ein Ringelement (6) auf der Oberseite der beweglichen Scheibe (4), das heißt, auf der Oberfläche der beweglichen Scheibe gegenüber der festen keramischen Scheibe (10), montiert ist.

5. Schaltungsanordnung nach Anspruch 4, **dadurch gekennzeichnet, dass** das Ringelement (6) ein peripheres elastisches Zahnelement (6') aufweist und von einem Antriebselement (3) angetrieben wird, und dass das elastische Zahnelement (6') durch Drehung in sich quer erstreckende Hohlräume (17) eingreift, die auf einer Innenoberfläche des oberen Außengehäuses (5) angeformt sind.

6. Schaltungsanordnung nach einem oder mehreren der vorherigen Ansprüche, **dadurch gekennzeichnet, dass** der Wasserleitungsfluss am Anlieferungsbereich (20) von dem Ventilkörper abgestellt werden kann, der ein Schraubenelement (22) aufweist, das einen Steuerstab (7) umfasst, mit dem ein Steuerknopf verbunden ist.

## Revendications

1. Un assemblage de commutation (1), ayant au moins une voie d'entrée et une pluralité de voies de sortie pour des composants de robinet, en particulier pour des raccords d'alimentation en d'eau d'un boîtier de douche multifonctionnel, comprenant un corps central (2) fonctionnant comme élément support, un élément d'entraînement (3) d'un disque déplaçable (4) pouvant tourner autour du corps central pour sélectionner des circuits d'alimentation en eau raccordés auxdits raccords, ledit disque déplaçable (4) comprenant au moins un port (14) pour mettre en communication respectivement l'un des trous (15) d'un disque en céramique fixe (10) de l'assemblage de commutation avec une chambre de délivrance (16) définie entre le corps central (2) et une enveloppe externe (5, 18) de l'assemblage de commutation, **caractérisé en ce que** ladite enveloppe externe (5, 18) comprend une enveloppe externe supérieure (5) et une enveloppe externe inférieure (18), l'enveloppe externe supérieure (5) étant rigidement fixée sur l'enveloppe externe inférieure (18) par soudage ultrasonique, de façon à réaliser une enveloppe externe monobloc (5, 18), **caractérisé en ce que** ladite enveloppe externe (5, 18) inclut en outre à l'intérieur un corps formant vanne (22) pour arrêter l'écoulement d'eau fourni à la voie d'entrée.

2. Un assemblage de commutation selon la revendication 1, **caractérisé en ce que** ladite enveloppe externe inférieure (18) est conçue pour maintenir à l'intérieur le disque en céramique fixe (10) et une partie inférieure du corps central (2), laquelle partie inférieure (2) pouvant être bloquée par rapport à l'enveloppe externe inférieure (18) au moyen d'un élément fileté de blocage (9) s'étendant à l'extérieur de l'enveloppe externe.

3. Un assemblage de commutation selon la revendication 2, **caractérisé en ce que** ledit élément fileté de blocage (9) est perforé axialement pour permettre à l'eau entrant de passer à travers, vers une région de délivrance (20) à l'intérieur du corps central (2).

4. Un assemblage de commutation selon une ou plusieurs des revendications précédentes, **caractérisé en ce qu'**un élément annulaire (6) est monté au sommet du disque déplaçable (4), c'est-à-dire sur la surface du disque déplaçable opposée au disque en céramique fixe (10).

5. Un assemblage de commutation selon la revendication 4, **caractérisé en ce que** ledit élément annulaire (6) comprend un élément denté élastique périphérique (6') et est entraîné par un élément d'entraînement (3) et **en ce que** ledit élément denté élastique (6') vient en prise, lorsqu'il est tourné, avec des cavités s'étendant radialement (17) formées sur une surface interne de ladite enveloppe externe supérieure (5).

6. Un assemblage de commutation selon un ou plusieurs des revendications précédentes, **caractérisé en ce que** l'écoulement d'alimentation en eau peut être arrêté, au niveau de la zone de délivrance (20), par le corps formant vanne comprenant un élément formant vis (22) incluant une tige de commande (7) à laquelle un bouton de commande est relié.
